# EUROPEAN PATENT APPLICATION

(11) **EP 2 947 619 A1**
(43) Date of publication of application: **25.11.2015**
(21) Application number: 15168352.1
(22) Date of filing: 20.05.2015
(51) Int. Cl.: G06Q 30/02

(54) **METHOD FOR PROVIDING ADVERTISEMENT, DISPLAY DEVICE, MOBILE DEVICE, AND NON-TRANSITORY RECORDABLE MEDIUM**

(30) Priority: 23.05.2014 KR 20140062528
(71) Applicant: Samsung Electronics Co., Ltd, Gyeonggi-do 443-742 (KR)
(72) Inventor: Lee, Kang-rok, 905-803 Seongnam-si (KR); Lea, Jong-ho, 302-501 Seongnam-si (KR); Lee, Ho-dong, Suwon-si (KR)
(74) Representative: Appleyard Lees

(57) **Abstract**

A method for providing an advertisement for a display device is provided, which includes generating a color identification code which includes a plurality of pieces of advertisement information, encoding the generated color identification code into an advertisement image, and displaying the advertisement image encoded with the color identification code.

## Description

### CROSS-REFERENCE TO RELATED APPLICATION(S)

This application claims priority under 35 U.S.C. §119(a) from Korean Patent Application No. 10-2014-0062528, filed on May 23, 2014, in the Korean Intellectual Property Office, the disclosure of which is incorporated herein by reference in its entirety.

### BACKGROUND

### 1. Field

The present disclosure relates to a method for providing an advertisement, and more particularly to a method for providing an advertisement, a display device, a mobile device, and a non-transitory recordable medium, which can provide an advertisement using visible light communication technology.

### 2. Description of the Related Art

With the development of various display technologies, various advertisement techniques have been provided. In particular, advertisement using a large-scale display device such as a Large Format Display (LFD) has been increased. An LFD may be installed in a place which many people pass by, such as a subway station or a bus station, in order to provide various advertisement moving images and still images.

Since there is a limit in providing detailed information relating to products or services via such advertisement, technology that enables a user to directly receive desired detailed advertisements via a mobile device has recently appeared. For example, a user may acquire a quick response (QR) code or bar code information that is displayed on the LFD, and obtain detailed information about the products or services via analysis of the acquired code information. Since such an advertisement technique is based on a user's positive action, it has the advantages that it can avoid personal information protection problems and can provide customized advertisement, and thus has been lately spotlighted.

However, the QR code or bar code has drawbacks, such as, for example, that it has a low data transmission speed and low data transfer rate. Further, it is hard to provide the QR code or bar code for a moving image advertisement.

### SUMMARY

Exemplary embodiments have been made to solve the above-described problems, and an aspect of one or more exemplary embodiments is to provide a method and a device for providing an advertisement, which can provide large-capacity advertisements in various formats by using a color identification code.

According to one aspect of one or more exemplary embodiments, a method for providing an advertisement for a display device includes generating a color identification code which includes a plurality of pieces of advertisement information; encoding the generated color identification code into an advertisement image; and displaying the advertisement image encoded with the color identification code.

The color identification code may include common advertisement information which relates to all users and customized advertisement information which relates to a specific user.

Whether to provide the customized advertisement information may be determined based on user information which relates to a mobile device.

The color identification code may include main advertisement information and auxiliary advertisement information that is provided when a loading of the main advertisement is delayed.

The color identification code may include at least two regions in which each of the plurality of pieces of advertisement information is positioned, and a positioning of each of the plurality of pieces of information may be based on a kind of the advertisement information.

Each of the plurality of pieces of advertisement information may include at least one from among moving image data, still image data, audio data, and a website link.

The color identification code may include a Color Shifting Key (CSK).

The display device may include at least one from among a Large Format Display LFD), a Digital Information Display (DID), a digital signage, a kiosk, and a digital television (TV). According to another aspect of one or more exemplary embodiments, a method for providing an advertisement for a mobile device includes capturing a color identification code that is displayed on a display device; extracting a plurality of pieces of advertisement information by analyzing the captured color identification code; and displaying the extracted plurality of pieces of advertisement information.

The color identification code may include common advertisement information which relates to all users and customized advertisement information which relates to a specific user.

Whether to display the customized advertisement information may be determined based on user information which relates to the mobile device.

The displaying may include displaying auxiliary advertisement information that is provided when a loading of main advertisement information is delayed.

The color identification code may include at least two regions in which each of the plurality of pieces of advertisement information is positioned, and a positioning of each of the plurality of pieces of advertisement information may be based on a kind of the advertisement information. Each of the plurality of pieces of advertisement information may be displayed on a separate respective region of a screen.

Each of the plurality of pieces of advertisement information may include at least one from among moving image data, still image data, audio data, and a website link.

The color identification code may include a CSK (Color Shifting Key).

The display device may include at least one from among a LFD (Large Format Display), a DID (Digital Information Display), a digital signage, a kiosk, and a digital TV.

According to still another aspect of one or more exemplary embodiments, a display device includes a color identification code generator configured to generate a color identification code which includes a plurality of pieces of advertisement information; an encoder configured to encode the generated color identification code into an advertisement image; and a display configured to display the advertisement image encoded with the color identification code. According to still another aspect of one or more exemplary embodiments, a mobile device includes a capturer configured to capture a color identification code that is displayed on a display device; an extractor configured to extract a plurality of pieces of advertisement information by analyzing the captured color identification code; and a display configured to display the extracted plurality of pieces of advertisement information.

According to still another aspect of one or more exemplary embodiments, a recordable medium may be a non-transitory recordable medium having recorded thereon a computer program which is executable by a computer for performing the method for providing an advertisement as described above.

According to various exemplary embodiments as described above, the method and the device for providing an advertisement can provide large-capacity advertisements in various formats by using the color identification code.

In addition, effects that can be obtained or predicted according to the exemplary embodiments are directly or suggestively disclosed in the detailed description of the exemplary embodiments. In particular, various effects predicted according to the exemplary embodiments will be disclosed in the following detailed description.

### BRIEF DESCRIPTION OF THE DRAWINGS

The above and other aspects, features and advantages of the exemplary embodiments will be more apparent from the following detailed description when taken in conjunction with the accompanying drawings, in which:
FIG. 1 is a block diagram illustrating the configuration of a display device, according to an exemplary embodiment;
FIG. 2 is a diagram illustrating information that is included in a color identification code, according to an exemplary embodiment;
FIG. 3A is a diagram explaining a method for providing advertisement information according to an exemplary embodiment;
FIG. 3B is a diagram illustrating an example in which one uniform resource locator (URL) includes both common advertisement information and customized advertisement information;
FIG. 4 is a diagram explaining a method for providing advertisement information in consideration of user information which relates to a mobile device, according to an exemplary embodiment;
FIG. 5 is a diagram explaining a method for providing advertisement information, according to another exemplary embodiment;
FIG. 6 is a diagram illustrating an advertisement information position in a color identification code, according to an exemplary embodiment;
FIG. 7 is a block diagram illustrating the configuration of a mobile device, according to an exemplary embodiment;
FIG. 8 is a flowchart illustrating a method for providing an advertisement for a display device, according to an exemplary embodiment; and
FIG. 9 is a flowchart illustrating a method for providing an advertisement for a mobile device, according to an exemplary embodiment.

### DETAILED DESCRIPTION

Hereinafter, various exemplary embodiments will be described in detail with reference to the accompanying drawings.

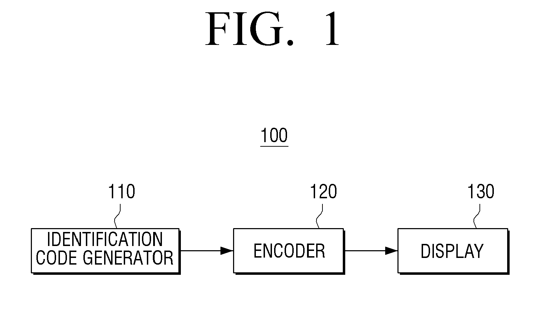

FIG. 1 is a block diagram illustrating the configuration of a display device 100, according to an exemplary embodiment.

A display device 100 according to an exemplary embodiment is a device which includes one or more displays and is configured to execute an application and/or to display content. For example, the display device 100 may be implemented by at least one of a LFD (Large Format Display), a DID (Digital Information Display), a digital signage, a kiosk, a digital television receiver, a tablet, a PC (Personal Computer), a PMP (Portable Multimedia Player), a PDA (Personal Digital Assistant), a smart phone, a cellular phone, and a digital picture frame. In particular, the display device 100 according to an exemplary embodiment functions to display an input advertisement image.

Referring to FIG. 1, the display device 100 according to an exemplary embodiment includes an identification code generator 110, an encoder 120, and a display 130.

The identification code generator 110 is configured to generate a color identification code that includes a plurality of pieces of advertisement information. Here, the color identification code is a code that expresses a specific program code or data by using a predetermined color pixel value. An example of the color identification code is a CSK (Color Shifting Key) code. CSK technology entails a method for expressing information by the causation of micro-deformation to light that is expressed by red, blue, and green colors of an LED (Light Emitting Diode), and has been adopted as the standard in IEEE 802.15.7. In this manner, the CSK may mount data on visible light that is emitted from the LED.

The encoder 120 is configured to encode the generated color identification code into the advertisement image. As described above, the display device 100 displays the advertisement image, and the encoder 120 performs encoding by performing an insertion of the color identification code into the displayed advertisement image. The encoder 120 may be included in a signal processor (not illustrated). The signal processor processes signals of video information and audio information that constitute content.

The display 130 displays the advertisement image encoded with the color identification code.

The display 130 includes a frame rate converter (not illustrated), a video enhancer (not illustrated), and a display module (not illustrated). The video enhancer removes image deterioration or noise, and the processed video data is stored in a frame buffer. The frame rate converter controls a frame rate, and the video data in the frame buffer is transferred to the display module according to the determined frame rate.

The display module is a circuit configuration that outputs the image to a display panel (not illustrated), and may include a timing controller (not illustrated), a gate driver (not illustrated), a data driver (not illustrated), and a voltage driver (not illustrated).

The timing controller (not illustrated) generates a gate control signal (scan control signal) and a data control signal (data signal) and rearranges input red-green-blue (RGB) data to supply the rearranged RGB data to the data driver (not illustrated). The gate driver (not illustrated) applies a gate on/off voltage Vgh/Vgl that is provided from the voltage driver to the display panel according to the gate control signal that is generated by the timing controller. The data driver (not illustrated) completes scaling according to the data control signal that is generated by the timing controller (not illustrated) and inputs the RGB data of the video frame to the display panel. The voltage driver (not illustrated) generates and provides driving voltages to the gate driver, the data driver, and the display panel.

The display panel may be designed by using any of various technologies. In particular, the display panel may include any one or more of LEDs (Light Emitting Diodes), an LCD (Liquid Crystal Display) panel, a PDP (Plasma Display Panel), a VFD (Vacuum Fluorescent Display), a FED (Field Emission Display), and an ELD (Electro Luminescence Display). Further, the display panel may be mainly of a light emission type, but does not exclude a reflection type display (E-ink, P-ink, and photonic crystal). Further, the display panel may be implemented by using a flexible display and/or a transparent display.

The display device 100 may provide a program tool for generating and encoding the color identification code. In an exemplary embodiment, if a user inputs desired advertisement information, the program tool generates a color identification code that includes such advertisement information. Then, the program tool encodes the color identification code into the advertisement image. If needed, a user may confirm in advance a display type of the color identification code for advertisement through a preview function that is provided by the program tool.

Although not illustrated in FIG. 1, the display device 100 includes other various technical configurations that are typically required to display the image.

The display device 100 may include a technical configuration that receives an advertisement image from an external device. In this case, the display device 100 may display advertisement images that are provided from various different advertisement subjects. For example, the display device 100 may receive advertisement information from various channels of broadcasting stations or may receive advertisement images from a plurality of Internet sources.

In particular, a receiver (not illustrated) may receive an advertisement image from a broadcasting station using a broadcasting network and may receive an advertisement image from a web server using the Internet. Further, advertisement images may be received from any of various kinds of recordable medium players that are provided in or connected to the display device 100. Here, the recordable medium player means a device that reproduces advertisement images stored in various types of recordable media, such as compact disk (CD), digital versatile disk (DVD), hard disk, blu-ray disk, memory card, and universal serial bus (USB) memory.

In the case of receiving an advertisement image from a broadcasting station, the receiver may include one or more configurations, such as a tuner (not illustrated) and a demodulator (not illustrated).

The tuner selects a radio frequency (RF) broadcasting signal that corresponds to a selected channel among RF broadcasting signals that are received via an antenna, and converts the selected RF broadcasting signal into an intermediate frequency (IF) signal or a baseband video/audio signal. If the selected RF broadcasting signal is a digital broadcasting signal, the tuner converts it into a digital IF signal, while if the selected RF broadcasting signal is an analog broadcasting signal, the tuner converts it into an analogy baseband video/audio signal, also referred to as a composite video baseband signal (CVBS). The output signal is input to the signal processor (not illustrated). The tuner may receive an ATSC (Advanced Television System Committee) type single carrier RF broadcasting signal or a DVB (Digital Video Broadcasting) type multicarrier RF broadcasting signal.

The demodulator (not illustrated) receives and demodulates the digital IF signal that is converted by the tuner. If the digital IF signal that is output from the tuner is of an ATSC type, the demodulator performs 8-VSB (Vestigial Side Band) demodulation. If the digital IF signal that is output from the tuner is of a DVB type, the demodulator performs COFDMA (Coded Orthogonal Frequency Division Multiple Access) demodulation. Further, the demodulator may perform channel decoding, such as trellis decoding, deinterleaving, or Reed-Solomon decoding.

In the case of performing the channel decoding, a stream signal transport stream (TS) is output. The stream signal may be a signal in which a video signal, an audio signal, and a data signal are multiplexed. For example, MPEG-2 standard video signal or Dolby AC-3 standard audio signal may be multiplexed MPEG-2 TS. The stream signal that is output from the demodulator is input to the signal processor (not illustrated).

The receiver may receive an advertisement signal from an external server. In this case, the receiver may be implemented by a network interface card (not illustrated). In this case, the display device 100 and the web server may follow Transmission Control Protocol / Internet Protocol (TCP/IP) that is a standard protocol related to a technology to transmit information on the Internet. The TCP is a protocol which relates to a technology for dividing transmitted data in a predetermined unit and to package the divided data, and IP is a protocol which relates to a technology for directly sending and receiving data.

The receiver may receive advertisement images from any one or more of various external devices in addition to the Internet. For this, the receiver may include any of a CVBS (Composite Video Banking Sync) terminal, a component terminal, an S-video terminal (analog), a DVI (Digital Visual Interface) terminal, an HDMI (High Definition Multimedia Interface) terminal, an RGB terminal, a D-SUB terminal, an IEEE 1394 terminal, an SPDIF terminal, a liquid HD terminal, and USB terminal.

Further, the receiver may include any of various wireless communication modules. In particular, the receiver may include local area communication modules, such as a wireless fidelity (WIFI) module, a Bluetooth module, an IrDA (Infrared Data Association) module, an NFC (Near Field Communication) module, a Zigbee module, an RFID (Radio Frequency Identification) module, an IrDa (Infrared Data association) module, and a UWB (Ultra Wideband) module. Further, the receiver may be implemented by 3^{rd} generation mobile communication module, such as WCDMA (Wideband CDMA), HSDPA (High Speed Downlink Packet Access), HSUPA (High Speed Uplink Packet Access), or HSPA (High Speed Packet Access), 4^{th} generation mobile communication module, such as mobile WiMAX or WiBro, or 4^{th} generation LTE (Long Term Evolution) module.

The receiver may receive an advertisement image from a set-top box. The set-top box may support bidirectional communication so as to support an IP TV.

The receiver may include at least one of various technical configurations as described above in order to receive advertisement images from different kinds of modules, and the signal processor may process and display the advertisement images that are received from the respective modules.

Further, although not illustrated, the display device 100 according to one or more exemplary embodiments further includes a signal processor (not illustrated) and a scaler (not illustrated). The signal processor is configured to process video information and audio information that constitute the advertisement image. If the stream signal is received, the signal processor may separate a video signal, an audio signal, and a data signal from the stream signal via inverse multiplexing. If the inversely multiplexed video signal is an encoded video signal, the signal processor performs decoding using a decoder. For example, the signal processor may decode an MPEG-2 standard encoded video signal by using an MPEG-2 decoder, and may decode an H.264 standard video signal of DMB (Digital Multimedia Broadcasting) or DVB-H by using an H.264 decoder. Further, the signal processor may process any of brightness, tint, and color tone of the video signal.

Further, the signal processor can process an inversely multiplexed audio signal. For example, the signal processor may decode an MPEG-2 standard encoded audio signal by using an MPEG-2 decoder, and may decode an MPEG-4 BSAC (Bit Sliced Arithmetic Coding) standard encoded audio signal of ground-wave DMB (Digital Multimedia Broadcasting) by using an MPEG-4 decoder. Further, the signal processor may process a DMB or DVB-H type MPEG-2 AAC (Advanced Audio Codec) standard encoded audio signal by using an AAC decoder. In addition, the signal processor may adjust any of bass, treble, and volume.

The scaler (not illustrated) is configured to scale a received advertisement image according to a predetermined scaling ratio. The scaling entails performing a multiplication of a distribution range of pixel values by a constant in order to cause the distribution range to fall within a predetermined range.

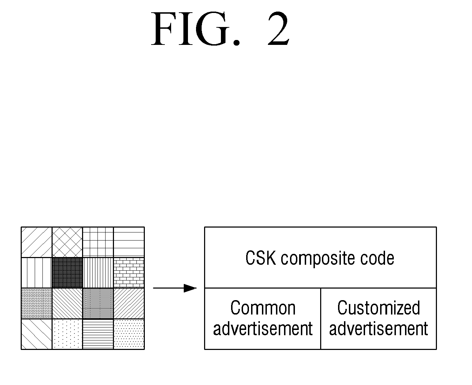

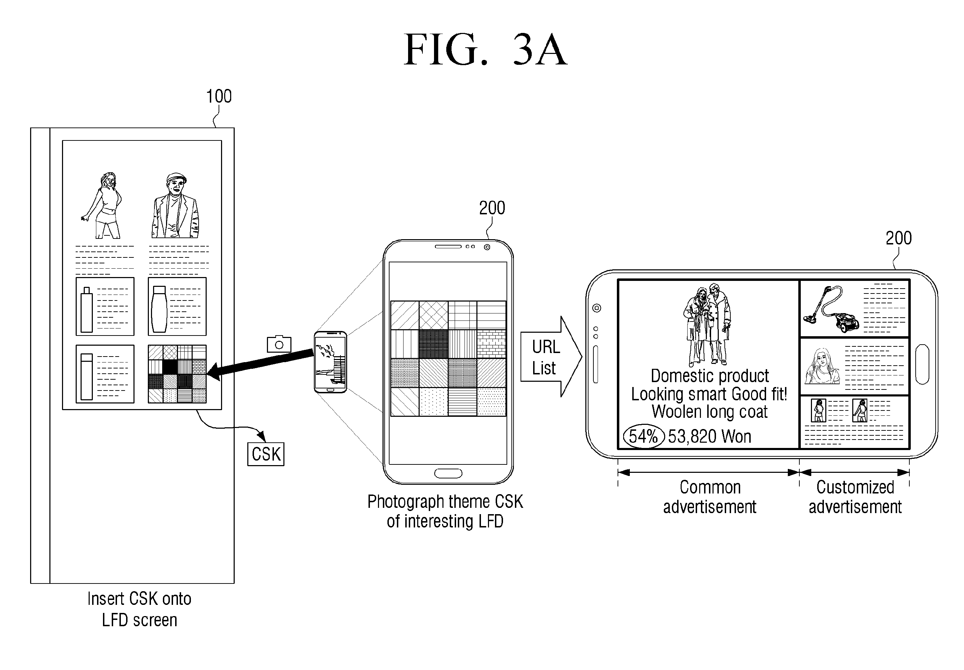

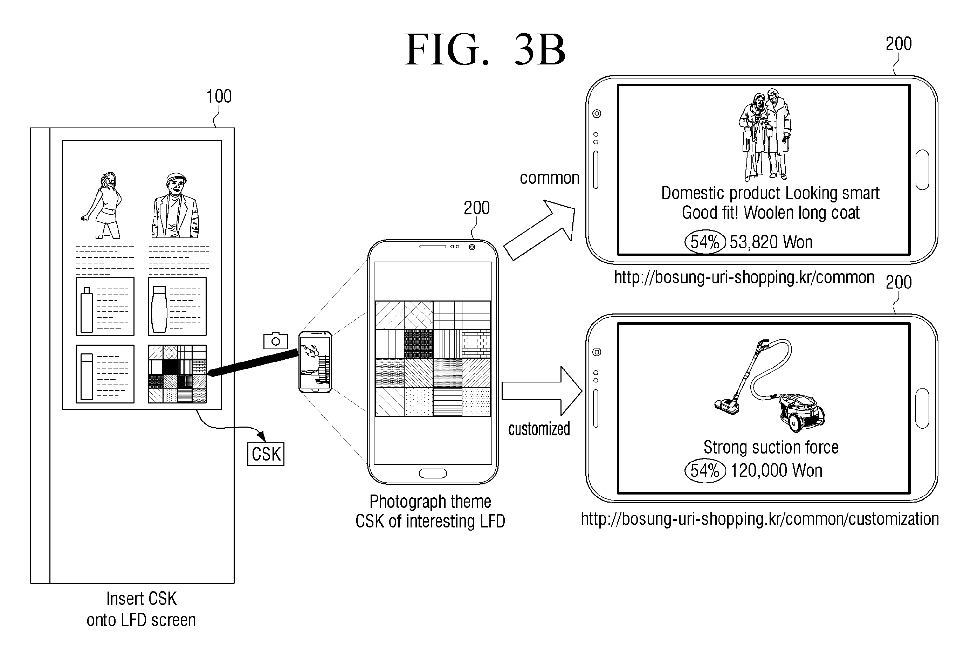

FIG. 2 is a diagram illustrating information that is included in a color identification code, according to an exemplary embodiment. FIG. 3A is a diagram explaining a method for providing advertisement information, according to an exemplary embodiment, and FIG. 3B is a diagram illustrating an example that one URL includes both common advertisement information and customized advertisement information.

The color identification code as described above may include common advertisement information which relates to all users and customized advertisement information which targets a specific user. In particular, as illustrated in FIG. 2, one region of the color identification code may include the common advertisement information for general users and the other region thereof may include the customized advertisement information for a specific user.

For example, the common advertisement information may include a web page URL that provides shopping information for the general users. If a user captures the color identification code that is displayed on the display device 100 by using user's own mobile device 200, the mobile device 200 may provide an URL that is included in the common advertisement information, and if the user selects the URL, the mobile device 200 visits and displays the corresponding web page. Alternatively, the mobile device 200 may automatically visit the corresponding web page in order to display web page information on the screen.

In the same manner, the customized advertisement information may include a web page URL that provides shopping information which is targeted to a specific user. If the user captures the color identification code that is displayed on the display device 100 by using user's own mobile device 200, the mobile device 200 may provide an URL that is included in the customized advertisement information via analysis of the color identification code, and if the user selects the URL, the mobile device 200 visits and displays the corresponding web page. The mobile device 200 may automatically visit the corresponding web page in order to display web page information on the screen.

In this case, as illustrated in FIG. 3A, the mobile device 200 may display the common advertisement information on a first region of the screen, and may display the customized advertisement information on a second region of the screen. If a plurality of pieces of customized advertisement information are provided, the mobile device 200 may partially display the plurality of pieces of customized advertisement information, or may display only the advertisement information that is selected by the user.

Alternatively, the color identification code may include at least one URL that includes both the common advertisement information which relates to the general users and the customized advertisement information which relates to the specific user. A part of the at least one URL may be recognized as the URL of the common advertisement information by the mobile device 200. Further, the remainder of the at least one URL may be recognized as the URL of the customized advertisement information by the mobile device 200.

For example, as illustrated in FIG. 3B, if the URL that includes the color identification code is http://www.bosung-uri-shopping.kr/common/customization, a part of the URL http://www.bosung-uri-shopping.kr/common may be a common advertisement information page, and http://www.bosung-uri-shopping.kr/common/customization may be a customized advertisement page. FIG. 3B exemplarily illustrates that the common advertisement information or the customized advertisement information is displayed according to an input of user's selection or in a predetermined order. However, as illustrated in FIG. 3A, it is also possible to display the common advertisement information on a first region of the screen and to display the customized advertisement information on a second region of the screen.

As described above, since the color identification code according to an exemplary embodiment makes it possible to transfer the plurality of pieces of advertisement information at a particular time, it becomes possible not only to provide both the pieces of information that suit the general users and the specific user, but also to selectively provide the information that suits the user.

Conversely, whether to provide the customized advertisement information may be determined on the basis of user information which relates to the mobile device 200.

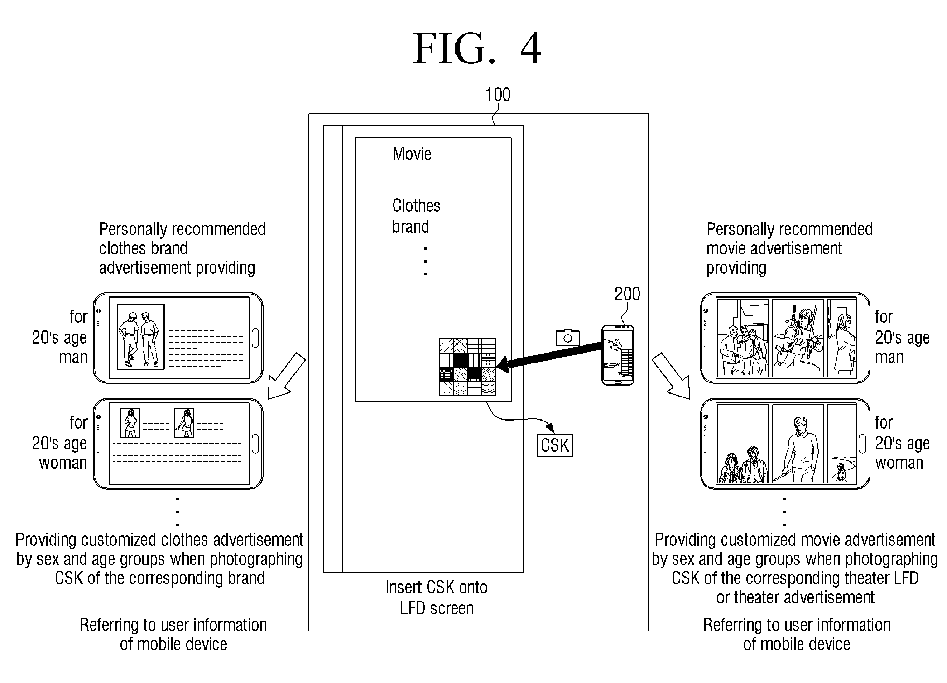

FIG. 4 is a diagram explaining a method for providing advertisement information in consideration of user information which relates to a mobile device, according to an exemplary embodiment.

The mobile device 200 may store user information therein. In the case where the mobile device 200 captures and analyzes the color identification code, a plurality of pieces of advertisement information may be included in the color identification code. In particular, the color identification code may include respective pieces of advertisement information which relate to different user groups having various characteristics. For example, the plurality of pieces of advertisement information may include advertisement information which relates to a man whose age is between 20 and 29, advertisement information which relates to a woman whose age is between 20 and 29, advertisement information which relates to a man whose age is between 30 and 39, and the like. In this case, the mobile device 200 may select matched advertisement information in consideration of the stored user information. For example, if it is determined that the user is a man whose age is between 30 and 39 on the basis of the user information stored in a storage (not illustrated) of the mobile device 200, a controller (not illustrated) of the mobile device 200 may select matched advertisement information. The mobile device 200 may display the selected advertisement information, but may disregard non-matched advertisement information.

FIG. 4 illustrates the exemplary embodiment as described above. An advertisement image is displayed on the LFD that is the display device 200, and color identification information is included in the advertisement image. The user captures the color identification information using the mobile device 200. The mobile device 200 identifies a plurality of advertisement images by analyzing the color identification information. As described above, each of the plurality of advertisement images includes common advertisement information and customized advertisement information. In this case, the customized advertisement information may include a plurality of pieces of advertisement information which is customized by sex and age groups. The mobile device 200 determines the user characteristics of the mobile device 200 based on the stored information, and selects and displays the customized advertisement information that matches the user. In this case, as illustrated in FIG. 4, the mobile device 200 may display the common advertisement information on a first region of the screen, and may display the selected customized advertisement information on a second region of the screen. Of course, the mobile device 200 may display a plurality of URLs so that the user can directly select one of the displayed URLs, and if the user selects the URL, the mobile device 200 may display the selected advertisement information on the respective region of the screen.

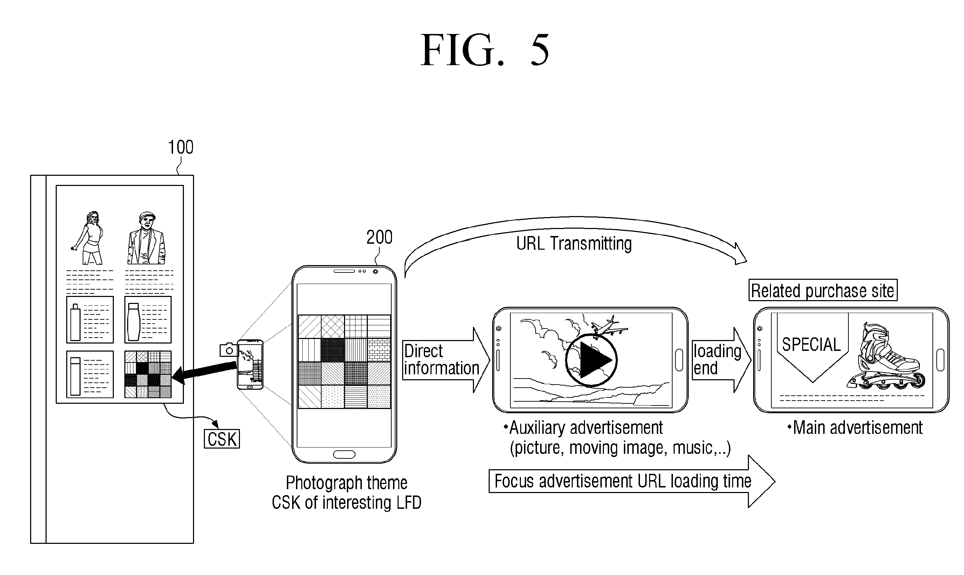

FIG. 5 is a diagram explaining a method for providing advertisement information, according to another exemplary embodiment.

The color identification code may include main advertisement information and auxiliary advertisement information that is provided when a loading of the main advertisement is delayed. The user should capture the color identification code via the mobile device 200, and if the color identification code includes the URL for providing the main advertisement information or moving image information, it may take time to connect to the URL or to reproduce the moving image. In this case, the color identification code may include auxiliary advertisement information that may be displayed while the main advertisement information is being loaded. In an exemplary embodiment illustrated in FIG. 5, the mobile device 200 captures the color identification code CSK, and loads the main advertisement information included in the color identification code. In this case, if it is determined that time is required, the mobile device 200 displays the auxiliary advertisement information included in the color identification code while the main advertisement information is being loaded. As illustrated in FIG. 5, the auxiliary advertisement information may include data having a different type from the type of the main advertisement information. For example, if the main advertisement information is provided via the URL, the auxiliary advertisement information may include at least one of moving image data, still image data, and audio data.

As described above, since the color identification code according to one or more exemplary embodiments includes data of various formats and it is possible to load the included data with their priorities changed according to circumstances, more flexible advertisement environment can be provided.

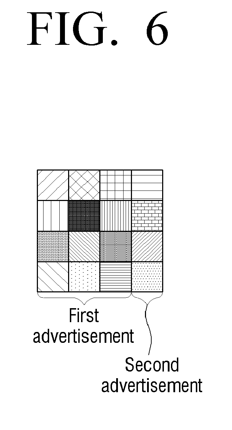

FIG. 6 is a diagram illustrating an advertisement information position in a color identification code, according to an exemplary embodiment.

A plurality of pieces of advertisement information may be positioned on different respective regions of the color identification code according to the kind of advertisement information. For example, first advertisement information may be included in a first position of the color identification code, and second advertisement information may be included in a second position of the color identification code. In this manner, the mobile device 200 can analyze the color identification code more efficiently. In particular, the mobile device 200 can determine advertisement information of a predetermined character with respect to a predetermined region of the color identification code, and thus faster information processing can be achieved.

As described above, each of the plurality of pieces of advertisement information may be composed of at least one from among moving image data, still image data, audio data, and a website link.

In particular, the website link may be used to perform audience measurement. If a user visits a website via a click (or touch) of the provided URL, a view of the corresponding advertisement is counted. Further, if an actual product purchase is made at the website that the user visits, it becomes possible to evaluate the advertisement effect according to the calculated purchase rate.

Further, the color identification code may interlock with a social networking service (SNS). The mobile device 200 may provide related SNS information via analysis of the color identification code. In this case, if the user selects the SNS, related products, moving image, and related news can be recommended.

Further, in the case where the display device 100 displays an advertisement image, different color identification information by video frames that constitute the advertisement image may be encoded to be provided. For example, different color identification information may be successively provided in a manner that first color identification information is provided for a first video frame and second color identification information is provided for a second video frame. In this case, the mobile device 200 captures the successive advertisement video frames and analyzes the color identification information for the respective video frames. In an exemplary embodiment, the color identification information can include more sufficient advertisement information. In particular, since one piece of color identification information includes a plurality of pieces of advertisement information and the successive advertisement images include successive different pieces of color identification information, it becomes possible to transfer sufficient advertisement information.

Hereinafter, the configuration of a mobile device 200 according to various exemplary embodiments will be described.

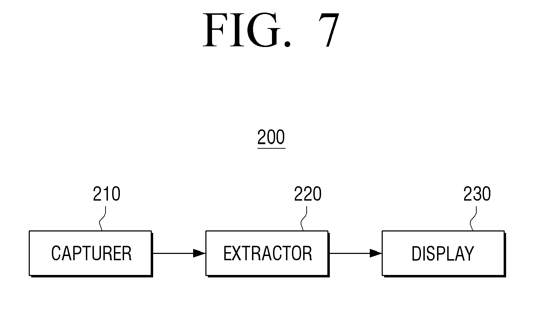

FIG. 7 is a block diagram illustrating the configuration of a mobile device 200, according to an exemplary embodiment.

Referring to FIG. 7, a mobile device 200 according to an exemplary embodiment includes a capturer 210, an extractor 220, and a display 230.

The capturer 210 is configured to capture the color identification code that is displayed on a display device 100. The capturer 210 may include a configuration to pick up an image. Further, in the case where the display device 100 provides a plurality of successive different pieces of color identification information, the capturer 210 may include a configuration to successively pick up a plurality of still images or to pick up a moving image. The capturer 210 includes a shutter, a lens portion, an iris, and a CCD (Charge Coupled Device) or a CMOS (Complementary Metal-Oxide-Semiconductor) image sensor. The shutter and the iris adjust the quantity of light for exposure, and a photodiode (PD) of a pixel array of the CCD or CMOS image sensor accumulates light and outputs an electrical signal according to the accumulated quantity of light. In this case, a CFA (Color Filter Array) filter may be used to obtain a color image. The CFA has a regularly arranged structure that permits passage of only one color light for each pixel, and is in any of various shapes according to the arrangement structure. The lens portion includes a zoom lens that can enlarge or reduce the size of an object and a focus lens that adjusts the focus of the object. The output electrical signal is converted into a digital signal via an analog-to-digital converter (ADC). Further, independent processes are performed with respect to a still image and a live view.

The extractor 220 is configured to extract a plurality of pieces of advertisement information via analysis of the captured color identification code. If the color identification code is a CSK code as described above, the extractor 220 analyzes the color identification code according to the standard of IEEE 802.15.7. Further, the extractor 220 extracts a plurality of pieces of advertisement information.

The display 230 is configured to display the extracted plurality of pieces of advertisement information.

The display 230 includes a technical configuration that is similar to that of the display device 100 as described above. Since the configuration of the display 230 is similar to that of the display device 100 as described above, a duplicate explanation thereof will be omitted.

The mobile device 100 further includes a controller (not illustrated) that is configured to control the mobile device 100 in correspondence with the above-described configuration.

The controller controls the overall operation of the mobile device 200. In particular, the controller controls the capturer 210 to capture the color identification code. In the case of capturing a plurality of color identification codes, the controller controls the capturer 210 to properly determine a frame rate and to successively capture a plurality of color identification code images according to the frame rate. Further, the controller controls the extractor 220 to extract a plurality of pieces of advertisement information via analysis of the captured color identification code.

Further, if a loading of the main advertisement is delayed, the controller controls the display 230 to preferentially display the provided auxiliary advertisement information.

The controller includes either or both of a hardware configuration, such as a central processing unit (CPU) and a cache memory, and a software configuration, such as an operating system and applications, to achieve specific respective purposes. Control commands for respective constituent elements to perform the above-described operation or an operation to be described below are read from a memory according to a system clock, and electrical signal are generated according to the read control commands to operate the respective constituent elements of the hardware.

Further, the mobile device 200 may further include a storage (not illustrated) configured to store the provided advertisement information. The storage may be implemented by various technical means. For example, as the storage, a memory, such as a ROM or a RAM, a HDD (Hard Disk Drive), or a BD (Blu-ray Disk) may be included. The memory may include an EEPROM (Electrically Erasable and Programmable ROM) or a nonvolatile memory, such as a nonvolatile RAM, but the use of a volatile memory, such as a static RAM or a dynamic RAM, may not be excluded. In the case of the hard disk drive, a small-size hard disk of 1.8 inches or less, which can be mounted on the mobile device 200, may be adopted.

Further, the mobile device 200 may further include a communicator (not illustrated) that enables the Internet to operate to visit a website included in the advertisement information.

The communicator may be implemented by a local area communication module, such as any one or more of a WIFI module, a Bluetooth module, an IrDA (Infrared Data Association) module, an NFC (Near Field Communication) module, a Zigbee module, an RFID (Radio Frequency Identification) module, an IrDa (Infrared Data association) module, and a UWB (Ultra Wideband) module. Further, the communicator may be implemented by a 3^{rd} generation mobile communication module, such as any one or more of WCDMA (Wideband CDMA), HSDPA (High Speed Downlink Packet Access), HSUPA (High Speed Uplink Packet Access), and/or HSPA (High Speed Packet Access), and/or a 4^{th} generation mobile communication module, such as any one or more of mobile WiMAX or WiBro, and/or a 4^{th} generation LTE (Long Term Evolution) module.

Further, the communicator may be implemented by a network interface card (not illustrated). In this case, the mobile device 200 and the web server may follow TCP/IP that is a standard protocol to transmit information on the Internet. The TCP is a protocol related to a technology to divide transmitted data in a predetermined unit and to package the divided data, and IP is a protocol related to a technology to directly send and receive data.

Hereinafter, a method for providing an advertisement according to various exemplary embodiments is described.

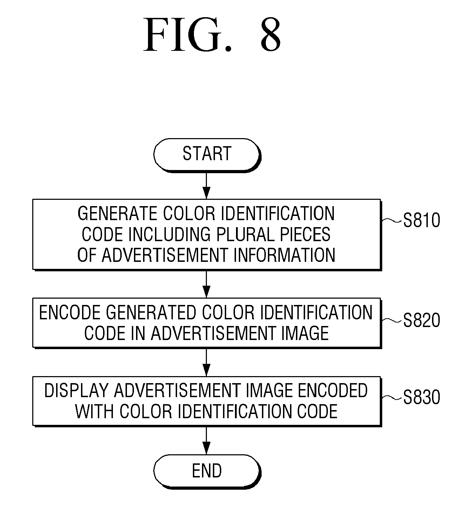

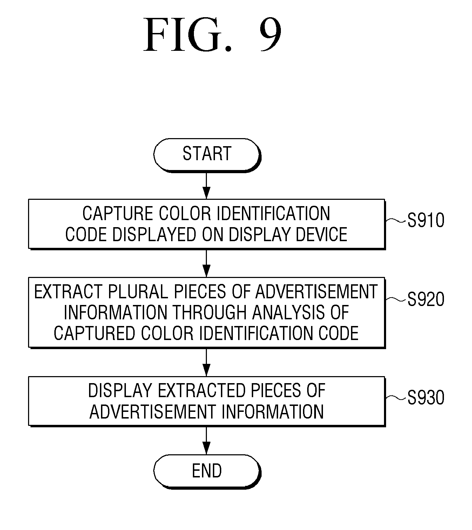

FIG. 8 is a flowchart illustrating a method for providing an advertisement for a display device according to an exemplary embodiment, and FIG. 9 is a flowchart illustrating a method for providing an advertisement for a mobile device according to an exemplary embodiment.

Referring to FIG. 8, a method for providing advertisement for a display device according to an exemplary embodiment includes generating a color identification code which includes a plurality of pieces of advertisement information in operation S810, encoding the generated color identification code into an advertisement image in operation S820, and displaying the advertisement image encoded with the color identification code in operation S830.

The color identification code may include common advertisement information which relates to all users and customized advertisement information which targets a specific user.

Further, whether to provide the customized advertisement information may be determined based on user information which relates to a mobile device.

The color identification code may include main advertisement information and auxiliary advertisement information that is provided when a loading of the main advertisement is delayed.

Further, the color identification code may include at least two different regions in which the plurality of pieces of advertisement information are positioned based on the respective kind of the advertisement information.

Each of the plurality of pieces of advertisement information may be composed of at least one from among moving image data, still image data, audio data, and a website link.

The color identification code may include a CSK (Color Shifting Key).

Here, the display device may include any one from among a LFD (Large Format Display), a DID (Digital Information Display), a digital signage, a kiosk, and a digital TV.

Referring to FIG. 9, a method for providing an advertisement for a mobile device includes capturing a color identification code that is displayed on a display device in operation S910, extracting a plurality of pieces of advertisement information by analyzing the captured color identification code in operation S920, and displaying the extracted plurality of pieces of advertisement information in operation S930.

The color identification code may include common advertisement information which relates to all users and customized advertisement information which is targeted to a specific user. Further, whether to display the customized advertisement information may be determined on the basis of user information which relates to the mobile device.

The displaying may include preferentially displaying auxiliary advertisement information that is provided when a loading of main advertisement is delayed.

Further, the color identification code may include at least two different regions in which the plurality of pieces of advertisement information are positioned, wherein the positioning is based on a respective kind of the advertisement information.

The extracted plurality of pieces of advertisement information may be respectively displayed on different respective regions of a screen.

Each of the plurality of pieces of advertisement information may include at least one from among moving image data, still image data, audio data, and a website link.

The color identification code may include a CSK (Color Shifting Key).

In this case, the display device may include any one of a LFD (Large Format Display), a DID (Digital Information Display), a digital signage, a kiosk, and a digital TV.

Conversely, the method for providing an advertisement as described above may be stored in the form of a program in a non-transitory computer-readable recordable medium. Here, a non-transitory readable medium is not a medium for storing data for a short time, but means a medium that can store data semi-permanently and is readable by an electronic device. For example, the non-transitory readable medium may include, for example, any of a CD, a DVD, a hard disk, a blu-ray disk, a USB, a memory card, or a ROM.

Further, the above-described advertisement method may be provided to be built in a hardware integrated circuit (IC) chip in an embedded software form, or may be included as a partial configuration of the display device 100 and the mobile device 200 as described above.

While the present inventive concept has been shown and described with reference to exemplary embodiments thereof, it will be understood by those of skill in the art that various changes in form and detail may be made therein without departing from the spirit and scope of the present inventive concept, as defined by the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for providing an advertisement for a display device, comprising:
generating a color identification code including a plurality of pieces of advertisement information;
encoding the generated color identification code into an advertisement image; and
displaying the advertisement image encoded with the color identification code.

2. The method as claimed in claim 1, wherein the color identification code comprises common advertisement information for all users and customized advertisement information for a specific user.

3. The method as claimed in claim 1 or 2, wherein whether to provide the customized advertisement information is determined based on user information of a mobile device.

4. The method as claimed in any one of claims 1 to 3, wherein the color identification code comprises main advertisement information and auxiliary advertisement information that is provided when a loading of the main advertisement is delayed.

5. The method as claimed in any one of claims 1 to 4, wherein the color identification code comprises different regions in which the plurality of pieces of advertisement information are positioned based on a kind of the advertisement information.

6. The method as claimed in any one of claims 1 to 5, wherein each of the plurality of pieces of advertisement information is composed of at least one of moving image data, still image data, audio data, and a website link.

7. The method as claimed in any one of claims 1 to 6, wherein the color identification code comprises a CSK (Color Shifting Key).

8. The method as claimed in any one of claims 1 to 7, wherein the display device is any one of a LFD (Large Format Display), a DID (Digital Information Display), a digital signage, a kiosk, and a digital TV.

9. A method for providing an advertisement for a mobile device, comprising:
capturing a color identification code that is displayed on a display device;
extracting a plurality of pieces of advertisement information through analysis of the captured color identification code; and
displaying the extracted plurality of pieces of advertisement information.

10. The method as claimed in claim 9, wherein the color identification code comprises common advertisement information for all users and customized advertisement information for a specific user.

11. The method as claimed in claim 9 or 10, wherein whether to display the customized advertisement information is determined based on user information of the mobile device.

12. The method as claimed in any one of claims 9 to 11, wherein the displaying comprises displaying auxiliary advertisement information that is provided when a loading of main advertisement is delayed.

13. The method as claimed in any one of claims 9 to 12, wherein the color identification code comprises different regions in which the plurality of pieces of advertisement information are positioned based on a kind of the advertisement information.

14. A display device comprising:
a color identification code generator configured to generate a color identification code which includes a plurality of pieces of advertisement information;
an encoder configured to encode the generated color identification code into an advertisement image; and
a display configured to display the advertisement image encoded with the color identification code.

15. A mobile device comprising:
a capturer configured to capture a color identification code that is displayed on a display device;
an extractor configured to extract a plurality of pieces of advertisement information by analyzing the captured color identification code; and
a display configured to display the extracted plurality of pieces of advertisement information.
